# EUROPÄISCHE PATENTSCHRIFT

(11) **EP 1 545 962 B1**
(45) Veröffentlichungstag und Bekanntmachung des Hinweises auf die Patenterteilung: **24.05.2006**
(21) Anmeldenummer: 03813027.4
(22) Anmeldetag: 02.10.2003
(51) Int. Cl.: B62D 25/08

(54) **STIRNWANDMODUL**
END WALL MODULE
MODULE DE BOUT DE CAISSE

(30) Priorität: 02.10.2002 DE 10246994
(43) Veröffentlichungstag der Anmeldung: 29.06.2005
(73) Patentinhaber: Faurecia Innenraum Systeme GmbH, 76767 Hagenbach (DE)
(72) Erfinder: BRAUN, Marco, 76848 Lug (DE); KOBER, Steve, 08233 Treuen OT Schreiersgrün (DE); BECKER, Udo, 38524 Sassenburg (DE); DEJAEGER, Ludovic, 38440 Wolfsburg (DE); BISCHOFF, Lars, 38104 Braunschweig (DE)
(74) Vertreter: Pfenning, Meinig & Partner GbR
(86) Internationale Anmeldenummer: PCT/EP2003/010957
(87) Internationale Veröffentlichungsnummer: WO 2004/056639

(56) Entgegenhaltungen:
- DE-A- 10 143 564
- DE-A- 19 946 655
- PATENT ABSTRACTS OF JAPAN vol. 1998, no. 13, 30. November 1998 (1998-11-30) -& JP 10 203279 A (ARACO CORP), 4. August 1998 (1998-08-04)
- PATENT ABSTRACTS OF JAPAN vol. 1997, no. 08, 29. August 1997 (1997-08-29) -& JP 09 099868 A (HONDA MOTOR CO LTD), 15. April 1997 (1997-04-15)

## Beschreibung

Die vorliegende Erfindung betrifft ein Stirnwandmodul für ein Kraftfahrzeug nach dem Oberbegriff des Anspruches 1.

Stirnwandmodule für Kraftfahrzeuge sind prinzipiell bekannt. Die Hauptfunktion eines solchen Stirnwandmoduls ist die Trennung des Motorraums zum Fahrzeuginnenraum bei Kraftfahrzeugen. Dieses Stirnwandmodul muss insbesondere bei modernen höherwertigen Kraftfahrzeugen besonderen Anforderungen gerecht werden. Hierzu gehört zum einen eine gute Schallabdämmung vom Motorraum zum Kraftfahrzeuginnenraum hin und außerdem eine möglichst gute Versteifung der Karosserie zur Verringerung von Torsionsschwingungen um die Fahrzeuglängsachse. Trotz dieser Anforderungen sollte das Stirnwandmodul nur ein geringes Gewicht aufweisen.

Es ist bekannt, Stirnwandmodule bzw. Stirnwände vorzusehen, welche zumindest bereichsweise eine Sandwichstruktur haben. D.h., dass eine erste sowie davon beabstandet eine zweite Wand vorgesehen ist. Diese Wände sind über eine relativ "harte" Schaumschicht verbunden.

Ein derartiges Stirnwandmodul ist beispielsweise aus der DE 19946655 A bekannt geworden, die auch den Oberbegriff des Anspruchs 1 definiert.

Diese Konstruktion gewährleistet zwar eine relativ hohe Steifigkeit der Gesamtkonstruktion, allerdings sind die Eigenschaften in Bezug auf die Schallübertragung ungenügend. Der relativ "harte" Schaum bewirkt eine direkte Körperschallübertragung von Vibrationen aus dem Motorraum in den Fahrzeuginnenraum. Durch Vorsehung eines relativ "weichen" Schaums wird die Stabilität der Konstruktion jedoch insbesondere im Kollisionsfall derart verringert, dass ein ungenügender Fahrzeuginsassenschutz gegeben ist.

Der vorliegenden Erfindung liegt daher die Aufgabe zugrunde, ein Stirnwandmodul für Kraftfahrzeuge bereitzustellen, welches einerseits leichtgewichtig ist und andererseits sowohl sehr gute Schalldämmungseigenschaften als auch, insbesondere im Crashfall, eine hohe Sicherheit bietet.

Diese Aufgabe wird durch ein Stirnwandmodul nach einem der unabhängigen Ansprüche gelöst.

Dadurch, dass ein gattungsgemäßes Stirnwandmodul an der ersten Wand eine erste Rippenstruktur und an der zweiten Wand eine zweite Rippenstruktur aufweist, wobei die Rippenstrukturen so geformt sind, dass in einem unverformten Einbauzustand des Stirnwandmoduls die erste und zweite Rippenstruktur voneinander beabstandet sind (d.h. nicht direkt im Eingriff sind) und in zumindest einem verformten Zustand des Stirnwandmoduls (z.B. im Falle eines Frontalcrashs bei Durchbiegung des Stirnwandmoduls) erste und zweite Rippenstrukturen formschlüssig miteinander in Eingriff sind, wird diese Aufgabe gelöst.

Eine Körperschallübertragung über die Rippenstrukturen wird aufgrund ihrer Beabstandung somit verhindert, die Luftschallübertragung wird durch den zwischen den beiden Wänden bestehenden Hohlraum unterbrochen. Somit wird gewährleistet, dass aufgrund der Doppelwandigkeit zum einen eine gute Schalldämpfung und Schalldämmung bewirkt wird (bei ausreichender Torsionsfestigkeit) und darüber hinaus im Crashfall aufgrund des in Eingrifftretens der Rippenstrukturen die Flächenträgheitsmomente, insbesondere bei Biegung stark ansteigen, so dass ein Eindringen von Komponenten aus dem Motorraum in den Fahrzeuginnenraum verhindert werden kann.

Im Falle einer Krafteinleitung kommt es also zur Durchbiegung der kraftzugewandten Deckschicht bis die Verrippungen beider Deckschichten (Wände) sich berühren. Dabei werden die Rippenstrukturen durch eine entsprechende Konturierung geführt, so dass sie nicht aneinander vorbeigleiten können. Nachdem die Rippen beider Deckschichten "auf Block" gegangen, sind beide Deckschichten als ein Bauteil zu betrachten, welches durch den Steineanteil eine deutlich höhere Biegesteifigkeit besitzt. Im normalen Einsatzfall haben beide Deckschichten untereinander keinen Kontakt, so dass es nicht zu einem Körperschallübertrag kommen kann. Als Vorteile der Erfindung sind somit Verbesserung der akustischen Eigenschaften, mögliche Materialeinsparung, Verbindung der Vorteile einer Schallisolierung mit denen eines Sandwichsystems, zusätzliche Energieabsorption zwischen eventuell im Zwischenraum bestehendem Schaum und den innen liegenden Rippenstrukturen etc. zu nennen.

Weiterbildungen der Erfindung werden in den abhängigen Ansprüchen beschrieben.

Eine Weiterbildung des Stirnwandmoduls sieht vor, dass an der ersten und/oder zweiten Wand auf der von der jeweils anderen Wand abgewandten Seite Komponenten wie Klimaanlagenteile oder dergleichen angeordnet sind. Hierdurch wird Masse an der Wand angebracht, damit die Wand gemeinsam mit diesen Komponenten quasi als "Feder-Masse-System" schwingt. Aufgrund der Rippenstrukturen, welche auch die Biegesteifigkeit der entsprechenden Wand erhöhen, wird die Wand versteift, so dass es nicht zu Biegeschwingungen innerhalb der Wand selbst kommen kann. Durch die Rippenstrukturen wird also gesichert, dass die gesamte Wand (bzw. ein gewünschter Teil) als "Einheit" schwingt, hierdurch wird die Masse der angekoppelten Komponente quasi "akustisch wirksam". Es ist hierbei besonders vorteilhaft, wenn das Gewicht der angehängten Komponenten größer als 2 kg/m² Flächengewicht beträgt. Insbesondere durch die Versteifung in Verbindung mit der Ankopplung von Gewicht kann somit die gesamte Stirnwand als Feder-Masse-System angesehen werden und ist daher weniger anfällig für aus dem Motorraum stammende Vibrationen. Durch diese Maßnahme kann insbesondere eine sogenannte "Schwermatte" (mit 3,5 bis 6 kg/m²) eingespart werden, deren einzige Aufgabe die Erhöhung der akustisch wirksamen Masse ist, welche auf der anderen Seite jedoch aufgrund ihres ansonsten unnötigen Ballastes die Verbrauchswerte der Kraftfahrzeuge erhöht.

Eine weitere vorteilhafte Weiterbildung sieht vor, dass im Zwischenraum zwischen erster und zweiter Wand Schaum (etwa Polyurethanschaum) angeordnet ist oder ein Hohlraum besteht. Im Falle eines Hohlraums, welcher z.B. im Wesentlichen luftdicht abzuschließen ist, wird die Luftschallübertragung auf ein Minimum reduziert. Aufgrund der fehlenden Verbindung der Rippenstrukturen zueinander ist außerdem die Körperschallübertragung reduziert. Der Schaum kann entweder den gesamten Zwischenraum ausfüllen (in diesem Falle sollte ein relativ "weicher Schaum" gewählt werden, um die Körperschallübertragung gering zu halten.

Eine weitere vorteilhafte Weiterbildung sieht vor, dass die erste und/oder zweite Rippenstruktur Stege aufweist. Diese Stege können entweder "stabförmig" sein und zu der jeweils anderen Wand hin gerade gerichtet sein. Besser ist es jedoch, wenn diese Stege (z.B. mit gleichbleibendem Querschnitt) z.B. senkrecht herausstehend über eine größere Länge auf der ersten bzw. zweiten Wand stehen. Hierdurch wird gewährleistet, dass diese Rippenstrukturen zum einen eine Erhöhung der Steifigkeit der Wände bewirken. Außerdem schwingen die Stege hierbei nicht bezüglich der Wand, so dass keine zusätzlichen Schallquellen entstehen.

Es ist hierbei möglich, dass z.B. die erste Rippenstruktur stets Stege gleicher Länge (d.h. in der Raumrichtung zu der zweiten Wand hin) aufweist. In diesem Falle laufen die Stege quasi "bis zur Mittellinie", hierdurch sind die Steifigkeiten beider Wände relativ gleich hoch zu gestalten.

Es ist jedoch auch möglich, dass die erste Rippenstruktur Stege mit jeweils unterschiedlicher Länge in Richtung zur zweiten Wand hin aufweist. Hierdurch wird erreicht, dass z.B. bei der Produktion des Stirnwandmoduls das Einlegen einer "Schaumkurve" erleichtert wird. Außerdem kann z.B. durch diese "Verzahnung", welche komplementär auf der gegenüberliegenden Wand gegeben ist, bei Schubbeanspruchung des Stirnwandmoduls eine noch höhere Stabilität gewährleistet.

Eine besonders vorteilhafte Weiterbildung sieht vor, dass der Abstand zwischen den Stegen einer Rippenstruktur zwischen 2 mm bis 200mm, vorzugsweise 4 mm bis 25 mm beträgt.

Eine weitere besonders vorteilhafte Weiterbildung sieht vor, dass die Stege auf ihrer zu der jeweils gegenüberliegenden Wand weisenden Fläche (also ihrer Stirnfläche) in ihrer Verlaufsrichtung Krümmungen und/oder Knicke aufweisen. Hierdurch wird quasi ein "mehrdimensionales" Design erreicht. Es können einerseits in einer Raumrichtung parallel zur Wandflächenebene, auf welcher der Steg steht, Knicke bzw. Krümmungen angeordnet sein (z.B. ein Zick-Zack-Verlauf der Stege). Andererseits kann auch senkrecht zur Wandflächenebene eine Knickung bzw. Krümmung bestehen (dies bewirkt praktisch, dass der Steg bezüglich der Wand, auf welcher er angeordnet ist, in seinem Verlauf unterschiedliche Höhen aufweist). Mit Krümmungen bzw. Knicken wird stets erreicht, dass eine noch bessere "Verzahnung" der gegenüberliegenden Rippenstrukturen erreicht wird. Dabei ist es selbstverständlich, dass die Knicke bzw. Krümmung so komplementär sind, dass ein Formschluss der gegenüberliegenden Rippenstrukturen entsprechende Verformung gegeben ist.

Es ist stets vorteilhaft, dass die Stege der ersten Rippenstruktur an ihren zu der zweiten Rippenstruktur hinweisenden Enden konkave oder konvexe Gestalt aufweisen, die hierzu komplementären Stege weisen eine entsprechend komplementäre Struktur auf. Die Enden der Stege können im Querschnitt entweder spitz zulaufend (z.B. im Dreiecksquerschnitt) oder mit einem sphärischen Querschnitt gestaltet sein.

Eine andere Möglichkeit sieht vor, dass die erste Rippenstruktur Stege aufweist und die zweite Rippenstruktur Hohlräume zur Aufnahme dieser Stege. Die Rippenstrukturen werden hierbei quasi als "Trigger" konstruiert. Eine erste Rippenstruktur drückt in die gegenüberliegende Rippenstruktur, welche z.B. mittig einen Hohlraum bis zu der jeweiligen Wand hin aufweist. Bei einem Crash kann eine mit Stegen ausgestattete Rippenstruktur in den Hohlraum der gegenüberliegenden Rippenstruktur eintauchen und hierbei Energie aufnehmen. Besonders vorteilhaft ist, wenn die Stege gegenüber den korrespondierenden Hohlräumen ein leichtes seitliches Übermaß aufweisen, so dass Reibarbeit bei Einführen in die Hohlräume verrichtet wird, welche Crashenergie aufzehrt. Hierbei können auch die Innenseiten der Hohlräume bzw. die Außenseiten der Stege mit einer rauhen Oberfläche ausgestattet sein (Mikroverrastung) oder mit korrespondierenden größeren Rastelementen. Hierdurch wird erreicht, dass nach völligem Eindringen der Stege in die Hohlräume ein besonders fester Verbund beider Wände entsteht, welcher unlösbar ist und dessen Flächenträgheitsmoment aufgrund der Unverschiebbarkeit der Wände zueinander besonders hoch ist.

Eine weitere vorteilhafte Weiterbildung sieht vor, dass die geringste Spaltbreite zwischen erster und zweiter Rippenstruktur zwischen 0,5 und 5 mm, bevorzugt 1 mm bis 2 mm beträgt. Hierdurch wird gewährleistet, dass der Körperschall zwischen erster und zweiter Wand auch bei leichten Vibrationen der ersten bzw. zweiten Wand nicht übertragen wird.

Eine weitere vorteilhafte Weiterbildung sieht vor, dass die Fläche der zweiten Wand auf der der ersten Wand abgewandten Seite mindestens 10, vorzugsweise 20, besonders vorzugsweise 30 % mehr Fläche aufweist als die erste Wand auf ihrer von der zweiten Wand abgewandten Seite. Dies ist besonders vorteilhaft, wenn das Stirnwandmodul in einen Rahmen zur Einfassung des Stirnwandmoduls eingeführt wird, welcher in einer Kraftfahrzeugkarosserie vorgesehen ist. In diesem Falle ist das Stirnwandmodul zumindest aus einer Richtung (z.B. vom Fahrzeuginnenraum her) leicht in den Stirnwandrahmen einzufügen, das flächenmäßige Übermaß der zweiten Wand sorgt hierbei zum einen aufgrund der Berührfläche mit den Stirnwandrahmen für eine besonders gute Festigkeit (diese kann insbesondere dadurch erhöht werden, dass der Stirnwandrahmen mit dem Stirnwandmodul verklebt und zusätzlich verschraubt wird). Es ist hierbei besonders vorteilhaft, wenn z.B. auf der der ersten Wand abgewandten Seite der zweiten Wand im Bereich des örtlich überragenden Flächenanteils zusätzliche Versteifungsrippen gegeben sind. Hierdurch wird erreicht, dass die hohe akustisch wirksame Masse der zweiten Wand bis in den Randbereich der zweiten Wand wirksam ist.

Eine besonders vorteilhafte Weiterbildung sieht vor, dass die erste und/oder zweite Wand und/oder die Rippenstrukturen aus Kunststoff oder Metall sind (Es sollten hierbei Materialien vorgesehen werden, die bei über 140°C dauertemperaturbeständig sind). Es ist vorteilhaft, wenn Wand und Rippenstrukturen einteilig sind, dies ermöglicht z.B. eine günstigere Stellung im Spritzgußverfahren. Es sind selbstverständlich auch zweiteilige Ausführungen möglich. Als Materialien kommen Metalle oder insbesondere Kunststoffe in Betracht. Als Kunststoffe kommen Polypropylen, Polyester (wie z.B.' PET, PBT) Polyamid oder Polyethylen in Betracht, alle mit 30 bis 50 Gew.-% Glasfaseranteil. Entsprechend können auch Kohlefasern oder Aramidfasern zugeschlagen werden. Die Wandstärke der ersten bzw. zweiten Wand beträgt bei Kunststoff vorzugsweise 1 bis 6 mm, besonders vorzugsweise 3 mm. Der E-Modul beträgt 8000 bis 12000 Mega Pascal.

Weitere vorteilhafte Weiterbildungen der vorliegenden Erfindung werden in den übrigen abhängigen Ansprüchen behandelt.

Die Erfindung wird nun anhand mehrerer Figuren im Detail erläutert. Es zeigen:
- Fign. 1a bis 1c: verschiedene Ausführungsformen eines erfindungsgemäßen Stirnwandmoduls im Querschnitt im unverformten Zustand,
- Fig. 2: ein Stirnwandmodul nach Fig. 1a im verformten Zustand,
- Fig. 3a: eine Ansicht einer Kraftfahrzeugkarosserie mit Stirnwandrahmen vom Innenraum des Kraftfahrzeuges aus gesehen,
- Fig. 3b: einen Schnitt gemäß A-A von Fig. 3a,
- Fig. 4a bis 4c: eine weitere Ausführungsform eines erfindungsgemäßen Stirnwandmoduls,
- Fig. 5: eine Draufsicht einer rippenförmigen Waben- struktur,
- Fig. 6: einen Schnitt durch eine Wabe gemäß Fig. 5, sowie
- Fig. 7: eine weitere Ausführungsform einer zweiten Wand eines Stirnwandmoduls.

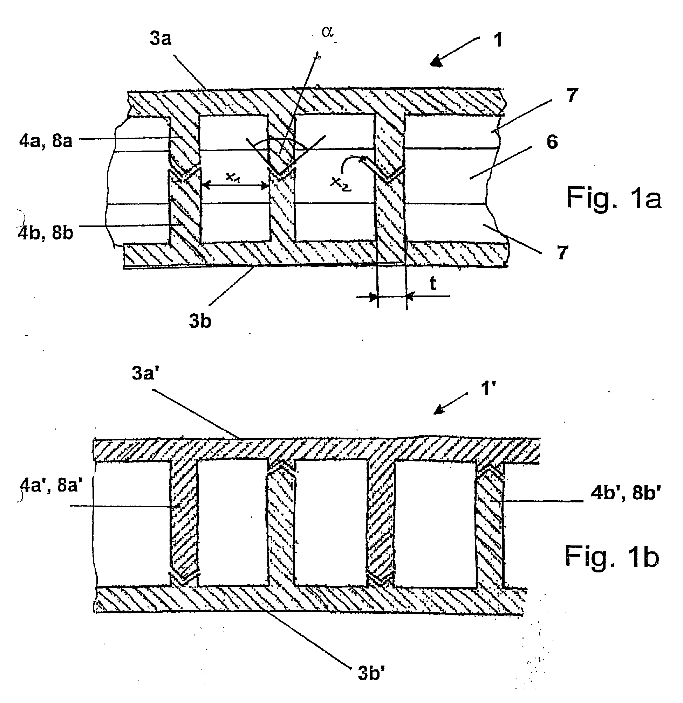

Fig. 1a zeigt einen Ausschnitt eines Querschnittes durch ein Stirnwandmodul 1 für ein Kraftfahrzeug. Das Stirnwandmodul weist eine erste Wand 3a sowie davon beabstandet eine zweite Wand 3b auf. Die erste Wand 3a weist eine Rippenstruktur 4a auf. Die zweite Wand 3b weist eine zweite Rippenstruktur 4b auf.

Die erste Rippenstruktur 4a weist Stege 8a auf, welche sich in Richtung senkrecht zur Zeichenebene in der Länge erstrecken. Die erste Rippenstruktur weist außerdem hierzu kreuzende Versteifungsstege 7 auf der ersten Wand 3a auf. Die Stege 8a haben an ihrem zu der zweiten Wand 3b hinweisenden Ende dreieckförmige Spitzen. Die zweite Wand 3b weist ebenfalls Stege 8b auf, welche zur zweiten Rippenstruktur 4b gehören sowie ebenfalls hierzu kreuzende Versteifungsstege 7. Diese Stege 8b weisen an ihrem zu der ersten Wand 3a hinweisenden Ende eine zu den Spitzen der Stege 8a komplementäre, ebenfalls im Querschnitt dreieckförmige Form auf, und zwar in Form einer Ausbuchtung. Zwischen den Spitzen der Stege 8a sowie den Aufnahmen der Stege 8b ist ein Spalt vorgesehen, welcher mindestens zwischen 0,5 mm und 5 mm groß ist.

Das Stirnwandmodul in Fig. 1a zeigt außerdem Schaumbereiche 6. Hierbei handelt es sich um einen Polyurethanschaum. Zur noch besseren Schallisolierung kann der Bereich zwischen erster und zweiter Wand auch bereichsweise evakuiert sein.

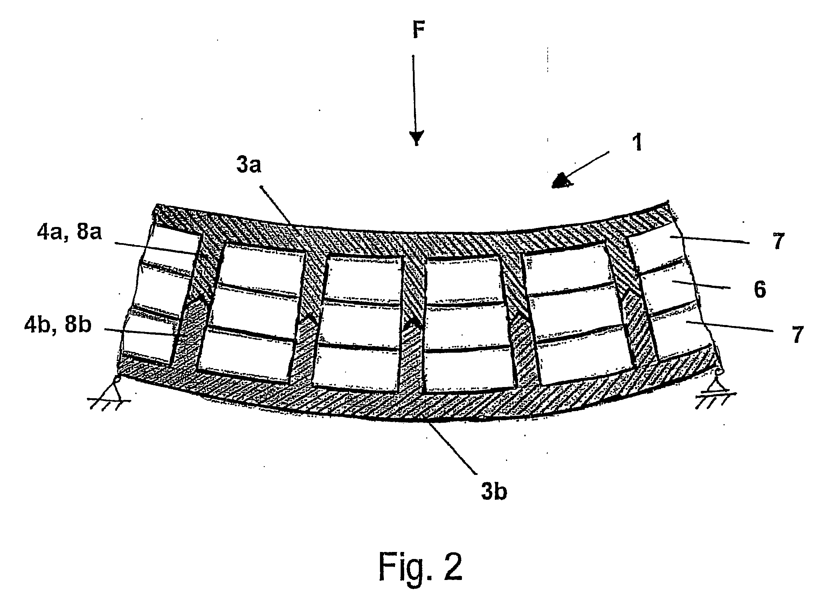

Somit handelt es sich bei dem Stirnwandmodul nach Fig. 1a um ein Stirnwandmodul mit erster und zweiter Wand und jeweiligen Rippenstrukturen, wobei die Rippenstrukturen so geformt sind, dass in dem in Fig. 1a gezeigten unverformten Einbauzustand des Stirnwandmoduls die erste und zweite Rippenstruktur voneinander beabstandet sind. Es wird später darauf eingegangen (siehe Fig. 2), wie bei Biegebelastung des Stirnwandmoduls die gegenüberliegenden Stege 8a bzw. 8b der Rippenstrukturen miteinander in Eingriff geraten.

Der Abstand zwischen den einzelnen Stegen 8a beträgt wie in Fig. 1a mit x1 bezeichnet zwischen 3 und 6 mm. Die zu wählende Stegbreite t hängt von dem Abstand x₂ und dem Winkel α der Stegspitzen ab. Bei α = 90° sowie x₂ = 1 mm ist die minimale Stegbreite t vorzugsweise größer als 3 mm (alle in Fig. 1a gezeigten Stegpaare haben identische Abmessungen).

Fig. 1b zeigt eine alternative Ausführungsform eines Stirnwandmoduls 1'. Hierbei ist ebenfalls eine erste Wand 3a' und eine zweite Wand 3b' gezeigt. Im Unterschied zu dem Stirnwandmodul nach Fig. 1a haben die Stege 8a' der ersten Rippenstruktur 4a' in Richtung senkrecht zur Flächenebene der ersten Wand 3a' nicht dieselbe Länge, sondern die Stege weisen, hier im alternierenden Wechsel, unterschiedliche Steglängen auf. Entsprechendes gilt für die Längen der Stege 8b' der zweiten Wand 4b'. Dies ist nötig, damit zwischen den jeweiligen Stegspitzen etwa gleiche Spaltbreiten bestehen. Somit weist in Fig. 1a die erste sowie zweite Rippenstruktur jeweils Stege mit in Richtung der jeweils anderen Wand gleicher Länge auf. In Fig. 1b weisen die erste und zweite Rippenstruktur jeweils Stege mit in Richtung der jeweils anderen Wand unterschiedlicher Länge auf.

Eine eventuell vorhandene Schäumung im Zwischenraum zwischen der ersten Wand 3a' und zweiten Wand 3b' ist in Fig. 1b nicht dargestellt.

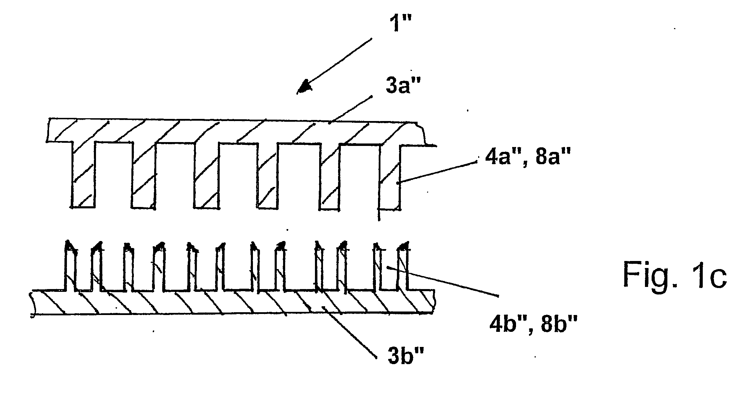

Fig. 1c zeigt eine weitere Ausführungsform 1" eines erfindungsgemäßen Stirnwandmoduls. Dieses weist wiederum eine erste Wand 3a" sowie eine zweite Wand 3b" auf. Die erste Wand 3a" weist eine erste Rippenstruktur 4a" mit Stegen 8a" auf. Die zweite Wand 3b" weist eine Rippenstruktur 4b" auf. Die zweite Rippenstruktur 4b" weist Hohlräume 8b" zur Aufnahme der Stege 8a" auf. Die Stege 8a" bzw. die den Stegen zugewandten Enden der Berandung der Hohlräume 8b" können Einlaufschrägen aufweisen. Die Hohlräume 8b" weisen zueinander einen geringeren Abstand auf als die Breite der Stege 8a", so dass im Fall eines Eindringens der Stege 8a" in die Hohlräume 8b" aufgrund des Übermaßes Verformungsarbeit verrichtet wird, welche Crashenergie auffängt. Hierbei können die korrespondierenden Flächen jeweils mit einer rauhen Oberfläche zur Gewährleistung von Mikroverrastung oder auch mit korrespondierenden Rastnasen ausgestattet werden, welche ein Trennen von erster Wand 3a" und 3b" verhindern.

Fig. 2 zeigt das Stirnwandmodul nach Fig. 1a in einem verformten Zustand. Durch Aufbringung einer Biegekraft F kommt es zu einer Durchbiegung des Stirnwandmoduls 1, wie es im Falle einer Frontalkollision des Kraftfahrzeuges der Fall wäre. Hierdurch geraten die Rippenstrukturen 4a sowie 4b mit ihren Stegen 8a bzw. 8b miteinander in Eingriff. Durch diesen Eingriff wird die Biegesteifigkeit des Stirnwandmoduls drastisch erhöht, wodurch ein Eindringen von Motorraumkomponenten im Fahrzeuginnenraum verhindert werden kann.

Sämtliche in den Figuren dargestellten Stirnwandmodule weisen erste bzw. zweite Wände aus Kunststoff auf. Wand und Rippenstruktur bilden jeweils ein einziges Teil, wie aus der Schraffur ersichtlich ist.

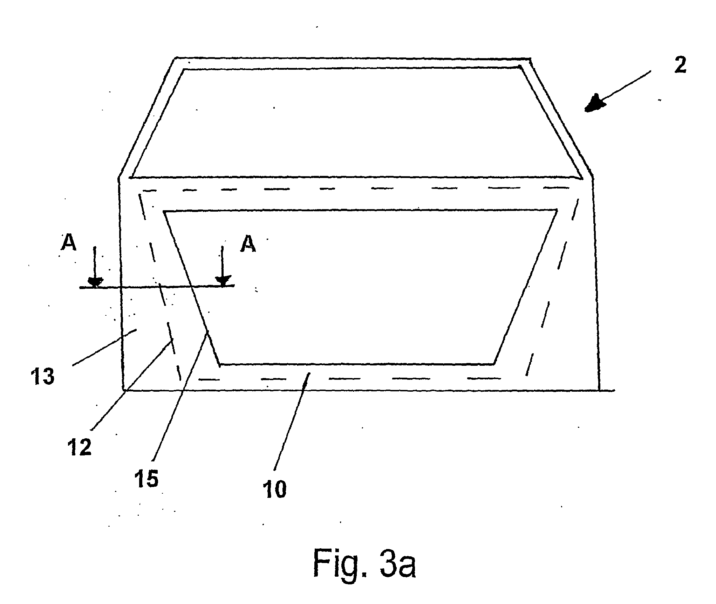

Fig. 3a zeigt einen Teil des Kraftfahrzeugs 2, nämlich die Rohkarosserie eines Kraftfahrzeugs 2 vom Innenraum aus gesehen. Hier ist ein Stirnwandrahmen 10 erkennbar, welcher in seinem Inneren eine Stirnwandöffnung aufweist, in welcher das Stirnwandmodul 1 montiert ist.

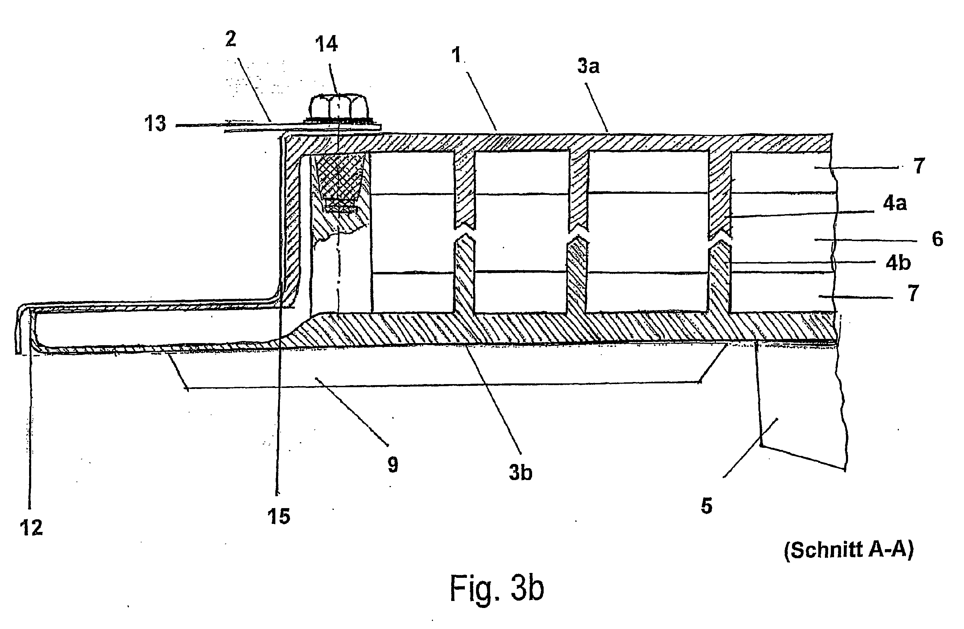

In Fig. 3b ist ein Schnitt A-A gezeigt. Hierin ist das Stirnwandmodul mit seiner ersten Wand 3a und seiner zweiten Wand 3b zu sehen. Rippenstrukturen 4a bzw. 4b sowie andere Bestandteile des Sandwichaufbaus sind bereits oben erläutert worden, so dass zur Vermeidung von Wiederholungen hierauf verwiesen wird. Das Stirnwandmodul ist über Schraubverbindungen 14 mit einer Blechstruktur 13 des Rahmens 10 verbunden. Neben diesen Verschraubungen ist das Stirnwandmodul 1 auch noch über eine nicht dargestellte Klebeschicht mit der Blechstruktur 13 großflächig verbunden. Die zweite Wand 3b überragt an den seitlichen Außenrändern die erste Wand 3a. Aus Fign. 3a und 3b ist ersichtlich, dass die Außenkante der ersten Wand mit 15 bezeichnet ist (durchgehende Linie in Fig. 3a) und die Außenkante der zweiten Wand mit 12 (schraffierte Linie in Fig. 3a). Die zweite Wand überragt die erste Wand flächenmäßig insgesamt um 10 %.

Die zweite Wand weist auf ihrer von der ersten Wand 3a abgewandten Seite eine Außenrippenstruktur 9 auf, welche durchgehend vom gemeinsamen Überlappungsbereich von Wand 3a und 3b (d.h. innerhalb des Bereiches 12 in Fig. 3a) bis in den Randbereich des überragenden Bereiches der Wand 3b (also innerhalb der schraffierten Linie 15 in Fig. 3a) reicht. Hierdurch wird eine Versteifung der zweiten Wand insbesondere in diesem überragenden Bereich erreicht, wodurch erreicht wird, dass die zweite Wand z.B. insgesamt (also auf ihrer Gesamtfläche) als einheitlich schwingendes System modelliert werden kann. Auf der der Wand 3a abgewandten Außenseite der zweiten Wand 3b sind außerdem Komponenten 5 wie z.B. Teile einer Klimaanlage fest angeordnet. Hierdurch wird erreicht, dass die Masse dieser Klimaanlagenteile, welche ohnehin in dem Fahrzeug untergebracht werden müssen, außerdem noch die Zusatzaufgabe erfüllen, die zweite Wand 3b (Analoges ist auch zusätzlich für die erste Wand 3a möglich) zu beschweren. Aufgrund der Rippenstrukturen 4b bzw. 9 wird somit erreicht, dass die gesamte zweite Wand quasi als "Einmassenschwinger" zu betrachten ist. Es ist somit nicht mehr nötig, wie bei Kraftfahrzeugen nach dem Stand der Technik, den gesamten innerhalb der strichlierten Linie 12 befindlichen Bereich z.B. mit einer Schwermatte zu belegen und hiermit unnötigen Ballast zu verursachen.

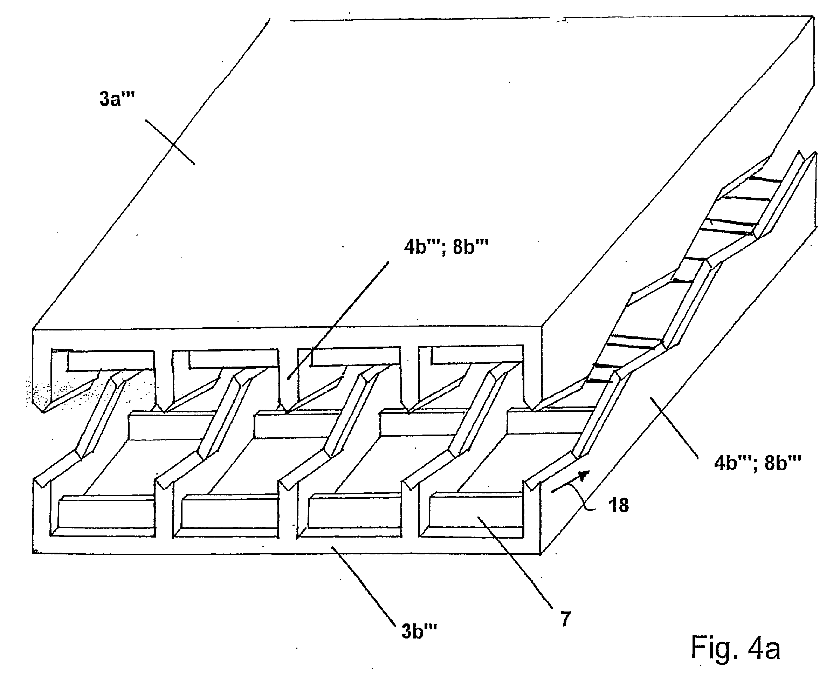

In Fig. 4a bis 4c ist eine weitere Ausführungsform eines erfindungsgemäßen Stirnwandmoduls gezeigt. Hierbei ist eine erste Wand 3a"' mit einer ersten Rippenstruktur 8a"' mit Stegen 4a"' gezeigt. Die zweite Wand 3b"' weist Rippenstrukturen 4b"' auf mit Stegen 8b"', zwischen denen rechtwinklig Versteifungsstege 7 angeordnet sind, welche jedoch die gegenüberliegenden Versteifungsstege 7 nie berühren. Die Stege 4b"' weisen in Verlaufsrichtung 18 Knicke auf. Dies kommt dadurch zustande, dass die Stege in Verlaufsrichtung unterschiedliche Höhen bezüglich der Wandflächenebene der Wand 3b"' aufweisen. Dieser Höhenverlauf führt dazu, dass eine noch bessere Verzahnung im Kollisionsfall gegeben ist (noch bessere Verhinderung des Schubs zwischen erster und zweiter Wand, außerdem ist diese Geometrie beim Ausschäumen vorteilhaft, da durch die geringeren Steghöhen das Schaumausgangsmaterial über die durch die Versteifungsstege 7 sowie die Stege 4b"' begrenzten Kammern leichter von Kammer zu Kammer wandern kann.

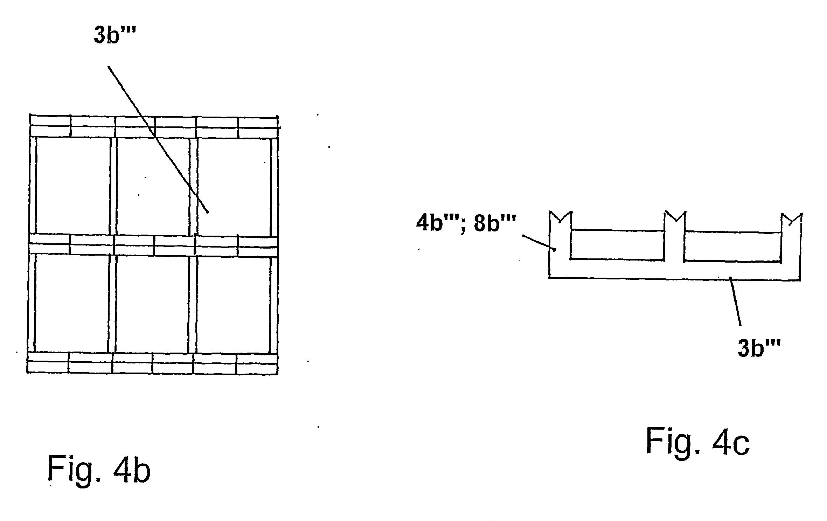

Fig. 4b zeigt eine Draufsicht auf die erste Wand 3b"' sowie Fig. 4c zeigt eine Seitenansicht der ersten Wand 3b"'.

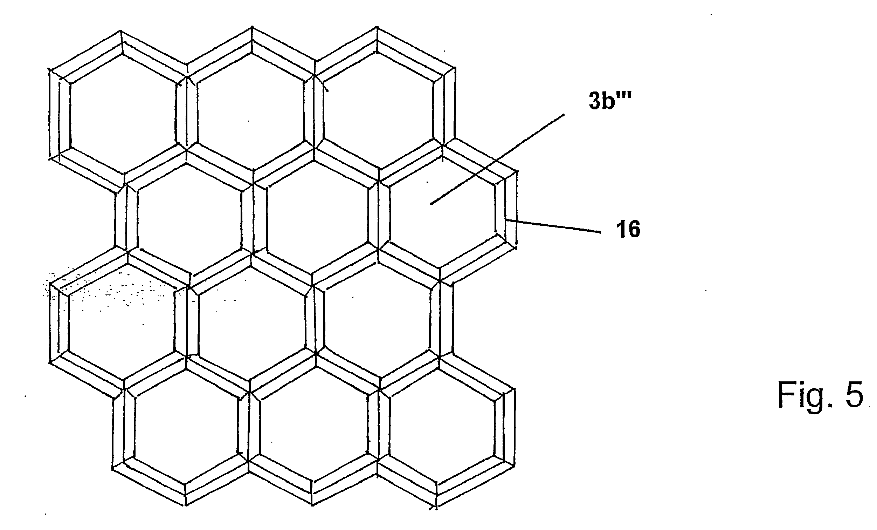

Fig. 5 zeigt eine Draufsicht auf eine Wand 3b"".
Hierbei sind die Rippenstrukturen als aneinander liegende Waben 16 ausgebildet. Die Waben können auch einen "chaotischen" Verlauf haben, da bei der gleichmäßigen Anordnung in Fig. 5 unter Umständen akustische Probleme entstehen.

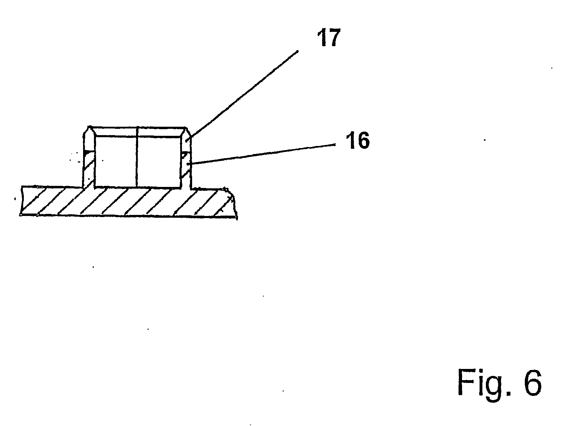

Fig. 6 zeigt einen Schnitt durch eine Wabe 16. Hierbei sind Ausnehmungen 17 auf der Oberseite der Wabe gezeigt, welche ermöglichen, dass beim Ausschäumen eine bessere Verteilung von Wabe zu Wabe gegeben ist. Die Anbringung auf der Oberseite ist vor allem aus produktionstechnischen Gründen vorteilhaft, prinzipiell wären auch entsprechende Ausnehmungen auf der Unterseite der Wabenstege möglich.

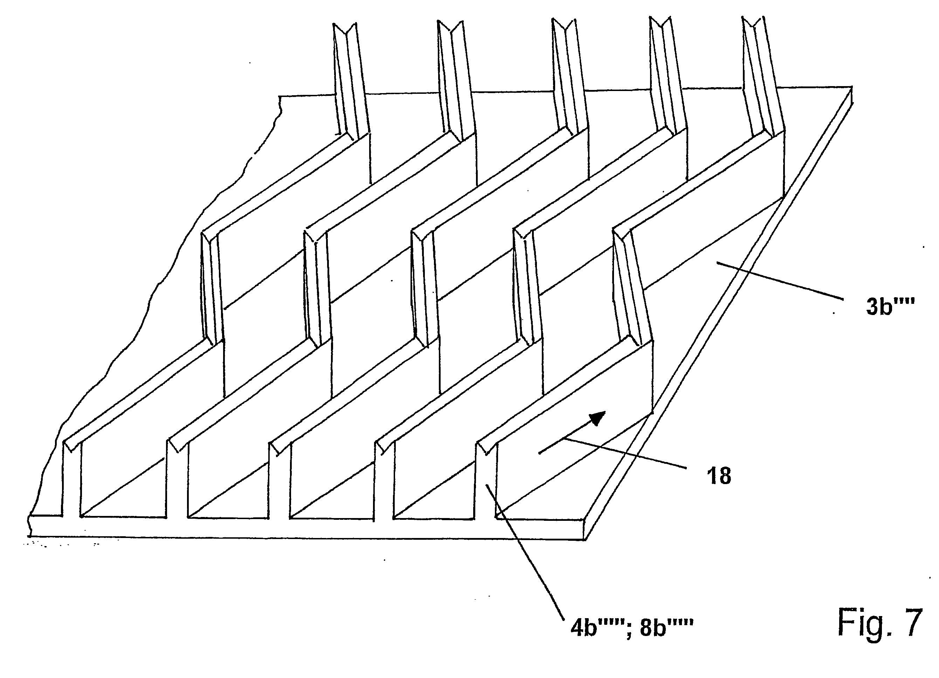

Schließlich zeigt Fig. 7 eine weitere Ausführungsform einer zweiten Wand 3b""'. Diese zeigen zueinander parallele Stege 4b""' einer Rippenstruktur 8b""'. Diese Stege weisen in Richtung 18, also in ihrer Verlaufsrichtung, eine Zick-Zack-Struktur auf. Dieser ZickZack-Verlauf, welcher in Richtung einer Wandflächenebene verläuft, sorgt ebenfalls dafür, dass eine bessere "Schubverzahnung" gegeben ist, auch bezüglich Biegung werden Vorteile erreicht, da die effektive Länge der Stege bezogen auf die Fläche der Wand 3b""' länger ist und somit ein besseres Flächenträgheitsmoment erreicht wird, was insbesondere bei Biegung im Frontalchrashfall wichtig ist.

Abschließend wird betont, dass insbesondere die in Fign. 4a bis 4c sowie in Fig. 7 gezeigten Knick- bzw. Krümmungsformen der Stege auch auf sämtliche anderen Ausführungsformen, insbesondere auf die Ausführungsformen von Fig. 1a bis 1c, anwendbar sind.

Es ist wesentlich, dass das hier gezeigte erfindungsgemäße Stirnwandmodul eine integrierte sehr gute Schallisolation bietet. Es handelt sich hierbei nicht um einen Aufbau einer Stirnwand mit einer darauf angeordneten zusätzlichen Isolation, es ist besonders wichtig, dass die Isolation bereits integriert ist. Dadurch können, anders als bei zusätzlich aufgesetzten Wabenstrukturen auf der Außenseite der Stirnwand auch hohe Schubkräfte aufgenommen werden und es ergibt kein sehr hohes Gesamtflächenträgheitsmoment. Nach der vorliegenden Erfindung kommt es im Falle einer Belastung bzw. eines Crashs zu einer Verhakung der beiden Schichten (d.h. der ersten und der zweiten Wand). Beide Wände haben in diesem Fall eine gemeinsame zwischen den einzelnen Schichten liegende Spannungsnulllinie, wobei sich ein erhöhtes Flächefiträgheitsmoment, bedingt durch die erhöhte Beabstandung der Einzelwände von der Spannungsnulllinie (Steiner-Anteil) ergibt. Der Vorteil dieser Variante liegt in der möglichen geringeren Dimensionierung der Stirnwand, wobei die Gesamtmasse des Systems weiter reduziert werden kann.

## Patentansprüche

1. Stirnwandmodul (1) für ein Kraftfahrzeug (2), wobei das Stirnwandmodul eine erste (3a) sowie davon beabstandet eine zweite (3b) Wand aufweist,
**dadurch gekennzeichnet,**
**daß** die erste Wand eine erste Rippenstruktur (4a) und die zweite Wand eine zweite Rippenstruktur (4b) aufweist, wobei die Rippenstrukturen so geformt sind, daß in einem unverformten Einbauzustand des Stirnwandmoduls die erste und zweite Rippenstruktur voneinander beabstandet sind und in zumindest einem verformten Zustand des Stirnwandmoduls erste und zweite Rippenstrukturen formschlüssig miteinander in Eingriff sind.

2. Stirnwandmodul nach Anspruch 1, **dadurch gekennzeichnet, daß** an der ersten (3a) und/oder zweiten Wand (3b) auf der von der jeweils anderen Wand abgewandten Seite Komponenten wie Klimaanlagenteile (5) oder dergleichen angeordnet sind.

3. Stirnwandmodul nach einem der vorhergehenden Ansprüche, **dadurch gekennzeichnet, daß** zwischen erster (3a) und zweiter (3b) Wand Schaum (7) angeordnet ist und/oder ein Hohlraum besteht.

4. Stirnwandmodul nach einem der vorhergehenden Ansprüche, **dadurch gekennzeichnet, daß** die erste (4a) und/oder zweite (4b) Rippenstruktur Stege (8a, 8b) aufweist.

5. Stirnwandmodul nach Anspruch 4, **dadurch gekennzeichnet, daß** die erste (4a) und/oder zweite (4b) Rippenstruktur jeweils Stege (8a, 8b) mit in Richtung der jeweils anderen Wand gleicher Länge aufweist.

6. Stirnwandmodul nach Anspruch 4, **dadurch gekennzeichnet, daß** die erste (4a') und zweite (4b') Rippenstruktur jeweils Stege (8a', 8b') mit in Richtung der jeweils anderen Wand unterschiedlicher Länge aufweisen.

7. Stirnwandmodul nach einem der Ansprüche 4 bis 6, **dadurch gekennzeichnet, daß** zwischen den Stegen (8a, 8b) einer Rippenstruktur (4a, 4b) der Abstand zwischen 2 mm und 200 mm, bevorzugt zwischen 4 mm und 25 mm beträgt.

8. Stirnwandmodul nach einem der Ansprüche 4 bis 7, **dadurch gekennzeichnet, daß** die Stege (8a, 8b) der ersten Rippenstruktur (4a) an ihren zu der zweiten Rippenstruktur (4b) hinweisenden Enden konvexe oder konkave Gestalt aufweisen.

9. Stirnwandmodul nach Anspruch 4, **dadurch gekennzeichnet, daß** die erste Rippenstruktur (4a") Stege und die zweite Rippenstruktur (4b") Hohlräume (8b") zur Aufnahme dieser Stege aufweist.

10. Stirnwandmodul nach einem der vorhergehenden Ansprüche, **dadurch gekennzeichnet, daß** die geringste Spaltbreite zwischen erster (4a) und zweiter (4b) Rippenstruktur zwischen 0,5 mm und 5,0 mm, bevorzugt zwischen 1 mm und 2 mm beträgt.

11. Stirnwandmodul nach einem der vorhergehenden Ansprüche, **dadurch gekennzeichnet, daß** die zweite Wand (3b) des Stirnwandmoduls (1) die erste Wand (3a) zumindest bereichsweise seitlich überragt.

12. Stirnwandmodul nach Anspruch 11, **dadurch gekennzeichnet, daß** die Fläche der zweiten Wand (3b) auf der der ersten Wand (3a) abgewandten Seite mindestens 10, vorzugsweise 20, besonders vorzugsweise 30 % mehr Fläche aufweist als die erste Wand auf ihrer von der zweiten Wand abgewandten Seite.

13. Stirnwandmodul nach einem der Ansprüche 11 oder 12, **dadurch gekennzeichnet, daß** die zweite Wand (3b) in den seitlich überragenden Bereichen auf ihrer der ersten Wand abgewandten Seite eine Außenrippenstruktur aufweist.

14. Stirnwandmodul nach einem der vorhergehenden Ansprüche, **dadurch gekennzeichnet, daß** die erste (3a) und/oder zweite (3b) Wand und/oder die Rippenstrukturen (4a, 4b) aus Kunststoff oder Metall sind.

15. Stirnwandmodul nach einem der Ansprüche 4 bis 14, **dadurch gekennzeichnet, dass** die Stege (4a"', 4b"') auf ihrer zu der jeweils gegenüberliegenden Wand weisenden Stirnfläche in ihrer Verlaufsrichtung Krümmungen und/oder Knicke aufweisen.

16. Kraftfahrzeug, enthaltend ein Stirnwandmodul (1) nach einem der vorhergehenden Ansprüche.

17. Kraftfahrzeug nach Anspruch 16, **dadurch gekennzeichnet, daß** dieses einen Rahmen (10) zur Einfassung des Stirnwandmoduls (1) einhält.

18. Kraftfahrzeug nach Anspruch 17, **dadurch gekennzeichnet, daß** das Stirnwandmodul mit dem Rahmen (10) zur Einfassung verschraubt und/oder verklebt ist.

## Claims

1. End-wall module (1) for a motor vehicle (2), and the end-wall module comprises a first (3a) and at a distance therefrom a second (3b) wall, **characterised in that** the first wall comprises a first rib structure (4a), and the second wall comprises a second rib structure (4b), and the rib structures are shaped in such a manner that, in a not preshaped assembly state of the end-wall module, the first and second rib structures are distanced from one another, and in at least a shaped state of the end-wall module first and second rib structures are positively interengaged.

2. End-wall module according to Claim 1, **characterised in that** on the first (3a) and/or second wall (3b) at the side facing away from the respective other wall are arranged components such as air-conditioning parts (5) or the like.

3. End-wall module according to one of the above claims, **characterised in that** between the first (3a) and second (3b) wall is placed foam (7) and/or exists a cavity.

4. End-wall module according to one of the above claims, **characterised in that** the first (4a) and/or second (4b) rib structure comprises webs (8a, 8b).

5. End-wall module according to Claim 4, **characterised in that** the first (4a) and/or the second (4b) rib structure comprises respective webs (8a, 8b) of equal length in the direction of the respective other wall.

6. End-wall module according to Claim 4, **characterised in that** the first (4a') and second (4b') rib structure comprises respective webs (8a', 8b') of different length in the direction of the respective other wall.

7. End-wall module according to one of Claims 4 to 6, **characterised in that** the gap between the webs (8a, 8b) of a rib structure (4a, 4b) lies between 2 mm and 200 mm, preferably between 4 mm and 25 mm.

8. End-wall module according to one of Claims 4 to 7, **characterised in that** the webs (8a, 8b) of the first rib structure (4a) are at their ends oriented towards the second rib structure (4b) of convex or concave shape.

9. End-wall module according to Claim 4, **characterised in that** the first rib structure (4a") comprises webs, and the second rib structure (4b") comprises cavities (8b") for accommodation of these webs.

10. End-wall module according to one of the above claims, **characterised in that** the narrowest gap width between first (4a) and second (4b) rib structure lies between 0.5 mm and 5.0 mm, preferably between 1 mm and 2 mm.

11. End-wall module according to one of the above claims, **characterised in that** the second wall (3b) of the end-wall module (1) laterally projects at least in some areas over the first wall (3a).

12. End-wall module according to Claim 11, **characterised in that** the surface of the second wall (3b) has on the side facing away from the first wall (3a) at least 10, preferably 20, particularly preferred 30% more surface than the first wall on its side facing away from the second wall.

13. End-wall module according to one of Claims 11 or 12, **characterised in that** the second wall (3b) comprises in the laterally projecting areas on its side facing away from the first wall an external rib structure.

14. End-wall module according to one of the above claims, **characterised in that** the first (3a) and/or the second (3b) wall and/or the rib structures (4a, 4b) are made of plastic or metal.

15. End-wall according to one of Claims 4 to 14, **characterised in that** the webs (4a"', 4b"') have on their end surface oriented toward the respective opposite wall in their orientation curvatures and/or bends.

16. Motor vehicle comprising a head-wall module (1) according to one of the above claims.

17. Motor vehicle according to Claim 16, **characterised in that** it contains a frame (10) for encasing the end-wall module (1).

18. Motor vehicle according to Claim 17, **characterised in that** the end-wall module is glued or bolted to the frame (10) for the purpose of encasement.

## Revendications

1. Module de bout de caisse (1) pour un véhicule (2), le module de bout de caisse présentant une première paroi (3a) ainsi qu'une deuxième paroi (3b) à distance de celle-ci,
**caractérisé en ce que** la première paroi présente une première structure de nervures (4a) et la deuxième paroi une deuxième structure de nervures (4b), les structures de nervures étant formées de façon à ce que dans un état de montage non déformé du module de bout de caisse, la première et la deuxième structures de nervures sont à distance l'une de l'autre et dans au moins un état déformé du module de bout de caisse, les première et deuxième structures de nervures sont en prise l'une avec l'autre par complémentarité de formes.

2. Module de bout de caisse selon la revendication 1,
**caractérisé en ce que**, au niveau de la première (3a) et/ou la deuxième (3b) paroi, sur la face opposée à l'autre paroi respective, des composants comme des pièces de climatisation (5) ou similaires sont placés.

3. Module de bout de caisse selon l'une des revendications précédentes,
**caractérisé en ce qu'**entre la première (3a) et la deuxième (3b) paroi, de la mousse (7) est placée et/ou il existe un espace creux.

4. Module de bout de caisse selon l'une des revendications précédentes,
**caractérisé en ce que** la première (4a) et/ou la deuxième (4b) structure de nervures présente des traverses (8a, 8b).

5. Module de bout de caisse selon la revendication 4,
**caractérisé en ce que** la première (4a) et/ou la deuxième (4b) structure de nervures présente chacune une traverse (8a, 8b) de même longueur en direction de l'autre paroi respective.

6. Module de bout de caisse selon la revendication 4,
**caractérisé en ce que** la première (4a') et la deuxième (4b') structure de nervures présentent chacune une traverse (8a', 8b') de longueur différente en direction de l'autre paroi respective.

7. Module de bout de caisse selon l'une des revendications 4 à 6,
**caractérisé en ce qu'**entre les traverses (8a, 8b) d'une structure de nervures (4a, 4b) l'écart est situé entre 2 mm et 200 mm, de préférence entre 4 mm et 25 mm.

8. Module de bout de caisse selon l'une des revendications 4 à 7,
**caractérisé en ce que** les traverses (8a, 8b) de la première structure de nervures (4a) présentent une forme convexe ou concave sur leurs extrémités pointant vers la deuxième structure de nervures (4b).

9. Module de bout de caisse selon la revendication 4,
**caractérisé en ce que** la première structure de nervures (4a") présente des traverses et la deuxième structure de nervures (4b") des espaces creux (8b") pour recevoir ces traverses.

10. Module de bout de caisse selon l'une des revendications précédentes,
**caractérisé en ce que** la largeur de fente la plus mince entre la première (4a) et la deuxième (4b) structure de nervures est située entre 0,5 mm et 5,0 mm, de préférence entre 1 mm et 2 mm.

11. Module de bout de caisse selon l'une des revendications précédentes,
**caractérisé en ce que** la deuxième paroi (3b) du module de bout de caisse (1) dépasse de la première paroi (3a) latéralement au moins de manière localisée.

12. Module de bout de caisse selon la revendication 11,
**caractérisé en ce que** la surface de la deuxième paroi (3b) sur la face opposée à la première paroi (3a) présente au moins 10, de préférence 20, de manière particulièrement préférée 30% de surface de plus que la première paroi sur sa face opposée à la deuxième paroi.

13. Module de bout de caisse selon la revendication 11 ou 12,
**caractérisé en ce que** la deuxième paroi (3b) présente une structure de nervures extérieure dans des zones dépassant latéralement sur sa face opposée à la première paroi.

14. Module de bout de caisse selon l'une des revendications précédentes,
**caractérisé en ce que** la première (3a) et/ou la deuxième (3b) paroi et/ou les structures de nervures (4a, 4b) sont en plastique ou en métal.

15. Module de bout de caisse selon l'une des revendications 4 à 14,
**caractérisé en ce** les traverses (4a"', 4b"') présentent, sur leur face avant faisant face à la paroi respective, des courbures et/ou des coudes dans le sens de la marche.

16. Véhicule comprenant un module de bout de caisse (1) selon l'une des revendications précédentes.

17. Véhicule selon la revendication 16,
**caractérisé en ce que** celui-ci comporte un cadre (10) pour enchâsser le module de bout de caisse (1).

18. Véhicule selon la revendication 17,
**caractérisé en ce que** le module de bout de caisse est vissé et/ou collé au cadre (10) pour l'enchâssement.
